(19) Europäisches Patentamt
European Patent Office
Office européen des brevets

(11) EP 1 098 208 B1

(12) **FASCICULE DE BREVET EUROPEEN**

(45) Date de publication et mention de la délivrance du brevet:
**08.09.2004 Bulletin 2004/37**

(51) Int Cl.[7]: **G01V 11/00**

(21) Numéro de dépôt: **00403055.7**

(22) Date de dépôt: **03.11.2000**

(54) **Méthode pour réaliser en 3D un modèle cinématique de déformation d'un bassin sédimentaire**

Verfahren zur Erzeugung eines dreidimensionalen kinematischen Modells der Verformung einer Sedimentschicht

Method of creating a 3D cinematic model of the deformation of a sedimentary bed

(84) Etats contractants désignés:
**DE GB IT NL**

(30) Priorité: **05.11.1999 FR 9914032**

(43) Date de publication de la demande:
**09.05.2001 Bulletin 2001/19**

(73) Titulaire: **Institut Français du Pétrole**
**92852 Rueil-Malmaison Cedex (FR)**

(72) Inventeurs:
- **Cornu, Tristan**
  **1183 AS Amstelveen (NL)**
- **Schneider, Frédéric**
  **78620 L'étang La Ville (FR)**

(56) Documents cités:
**FR-A- 2 748 516** **US-A- 4 991 095**

- **PISSETSKI V B: "DISLOCATIONAL ROCK MECHANICS AS A BASIS FOR SEISMIC METHODS IN THE SEARCH FOR HYDROCARBONS" REVUE DE L'INSTITUT FRANCAIS DU PETROLE,FR,EDITIONS TECHNIP. PARIS, vol. 50, no. 3, 1 mai 1995 (1995-05-01), pages 303-336, XP000512978 ISSN: 1294-4475**
- **WALTHAM D: "FINITE DIFFERENCE MODELLING OF SANDBOX ANALOGUES COMPACTION AND DETACHMENT FREE DEFORMATION" JOURNAL OF STRUCTURAL GEOLOGY,XX,PERGAMON PRESS, vol. 12, no. 3, 1990, pages 375-381, XP000576747 ISSN: 0191-8141**
- **CONTRERAD J ET AL: "KINEMATIC MODELING OF CROSS-SECTIONAL DEFORMATION SEQUENCES BY COMPUTER SIMULATION" J.G.R. JOURNAL OF GEOPHYSICAL RESEARCH,US,WASHINGTON, DC, vol. 95, no. B13, 10 décembre 1990 (1990-12-10), pages 21913-21929, XP000576751**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne une méthode pour réaliser un modèle cinématique de déformation 3D d'un bassin sédimentaire à partir d'un état initial non déformé.

Le modèle obtenu par la méthode permet de reconstituer un chemin de déformation géologiquement acceptable. Toutes les géométries intermédiaires du processus d'évolution subi par le bassin sédimentaire sont restituées de façon incrémentale dans le temps.

Ce type de modèle de bassin est un outil précieux pour les géologues car il leur permet de rendre compte de la variation de la perméabilité, de l'expulsion des fluides par compaction, de calculer des transferts thermiques dans le bassin, la maturation de la matière organique et la circulation des fluides, et ainsi de faciliter la délimitation des zones d'accumulation d'hydrocarbures et les conditions les plus favorables pour leur exploitation.

## Etat de la technique

Des modélisations mécaniques en 3D des déformations de bassins sédimentaires ont déjà été réalisées. Mais elles conduisent à des formulations très complexes dont le traitement s'avère très lourd en temps de calcul. Un exemple d'une telle modélisation est décrit par exemple par :

- Scott M. et al (1991) « Geometrical Modelling of Fault-related Folds : a Pseudo-three-dimensional Approach » ; Journal of Structural Geology, 13, pp 801-812.

Parmi les modèles cinématiques existants de bassins sédimentaires, on peut citer ceux qui fonctionnent en 2D décrits par exemple par :

- Suppe, J., « Geometry and Kinematic of Fault-bent Folding », Am. Journal of Science, 283, p. 684-721 (1993), qui ne traite pas de la compaction mécanique ; et par :

- Waltham D., « Finite Difference Modelling of Sandbox Analogues, Compaction and Detachment Free Déformation » ; in Journal of Structural Geology, vol 12, 3, 375-381, 1990, qui procède en considérant des cisaillements simples locaux mais sans respecter les longueurs et épaisseurs de bancs.

Par le brevet FR 2 748 516, on connaît également une méthode pour modéliser en 2D depuis un état initial non déformé, l'évolution d'un bassin géologique au cours du temps en tenant compte à la fois du glissement le long de discontinuités tectoniques majeures avec déformation interne des sédiments et b) de la compaction mécanique due à l'enfouissement des sédiments par déformation tectonique ou sédimentation. Après une subdivision préalable des objets géologiques du bassin en un certain nombre de couches ou bancs, par des limites (discontinuités stratigraphiques délimitant des bancs, failles délimitant des écailles, etc.) dont on connaît la position géométrique, on discrétise les bancs par des maillages, on détermine séparément la déformation tectonique de chaque couche discrétisée en respectant au mieux son épaisseur et sa longueur, et on modifie les maillages pour tenir compte de la compaction associée aux variations d'enfouissement des éléments maillés. Cette méthode est mise en oeuvre par le logiciel FOLDIS$^{TM}$.

D'autres modèles existent qui fonctionnent en 2D ou en « pseudo-3D » limités à l'étude de cas à symétrie cylindrique ou construits à partir de sections 2D topologiquement équivalentes. On en trouve un exemple décrit par :

- Shaw, J.G. et al : Structural Trend Analysis by Axial Surface Mapping ; AAPG Bulletin, 78, pp 700-721 ; 1994.

## La méthode selon l'invention

La méthode selon l'invention a pour objet la réalisation d'un modèle cinématique (prograde) permettant de restituer en 3D des géométries intermédiaires d'objets géologiques d'une zone souterraine, depuis un état initial jusqu'à un état actuel connu par interprétation de données sismiques acquises, par des mesures et par des observations, caractérisée en ce qu'elle comporte les étapes suivantes :

- on forme une représentation de la géométrie actuelle des objets géologiques de la zone par interprétation de données acquises obtenues par exploration sismique, par des mesures in situ et par des observations ;

- on subdivise chaque objet géologique en couches superposées, chacune de ces couches étant discrétisée par un maillage en une série d'éléments de volume hexaédriques ;

- on applique séparément et successivement des déformations tectoniques à chaque série d'éléments de volume d'une couche par rapport à une couche sous-jacente avec conservation de l'épaisseur et conservation de l'aire d'une surface neutre intermédiaire dans chaque élément de volume ; et

- on modifie itérativement les déformations tectoniques appliquées jusqu'à obtenir une représentation géologique sensiblement en accord avec l'état final connu de la zone souterraine.

Par application ensuite à un outil de modélisation d'un type connu, géochimique, thermique ou autre, de données associées à des géométries intermédiaires des objets géologiques restituées par le modèle cinématique réalisé, on peut plus facilement localiser ou délimiter dans le sous-sol des zones plus susceptibles de recéler des fluides tels que des hydrocarbures.

La méthode peut comporter une subdivision de chaque objet géologique en couches séparées les unes des autres par des interfaces de déformation (reportées uniquement sur les surfaces de contact seulement ou bien réparties sur des couches ductiles intermédiaires.

La méthode peut comporter aussi une modification géométrique des maillages pour tenir compte des effets de la compaction.

La méthode modélisation selon l'invention avec ses deux notions essentielles : la conservation de l'aire de la surface neutre et l'alternance de couches rigides séparées par des interfaces de cisaillement ou des intercouches ductiles, présente l'avantage d'être facile à implémenter et de rendre compte de façon cohérente des déformations internes subies par les couches, et de mieux représenter le cisaillement que l'on peut observer entre deux couches rigides, même dans des cas de structures complexes.

**Figures illustratives**

D'autres caractéristiques et avantages de la méthode selon l'invention, apparaîtront à la lecture de la description ci-après d'exemples non limitatifs de mise en oeuvre, en se référant aux dessins annexés où :

- la Fig.1 met en évidence une surface neutre NL et des interfaces cisaillées SI sur un exemple schématique de couches discrétisées ;

- la Fig.2 montre schématiquement le mécanisme de déformation d'une arête ;

- la Fig.3a, 3b montrent schématiquement en 3D un bassin constitué par une superposition de deux blocs séparés par une rampe, avant déformation (Fig.3a) et après déformation (Fig.3b) ;

- les Fig.4a à 4d représentent en 2D respectivement différents états d'évolution d'une section de bassin, séparés par des incréments de temps ;

- la Fig.5 montre schématiquement en 3D la déformation après déplacement avec cisaillement ;

- les Fig.6a, 6b montrent à intervalle d'un pas de temps, deux états successifs d'un même bassin avec une rampe dont le pendage évolue dans le sens de la largeur, respectivement avant une déformation avec cisaillement (Fig. 6a), et après cette déformation (Fig.6b) ;

- les Fig. 7a, 7b montrent schématiquement en 2D deux états successifs du bassin, là où la pente de la rampe est de 20° (section AA') ; et

- les Fig. 8a, 8b montrent schématiquement en 2D deux états successifs du même bassin, là où la pente de la rampe est de 60° (section BB').

**Description détaillée**

Principe du modèle

La déformation d'une couche d'un bassin sédimentaire peut être considérée comme globalement rigide, les déformations internes étant locales et situées aux interfaces entre les couches ou aux points de rupture de pente. Cette déformation par blocs rigides est rendue possible d'une part par des processus cataclastiques permettant le mouvement de blocs par fracturation-broyage à leur limite, et d'autre part d'un phénomène de fluage par dissolution-cristallisation sous contrainte. Dans ce dernier cas, les déplacements relatifs des blocs sont accommodés par des processus de dissolution dans les zones soumises aux plus fortes contraintes (stylolites, schistosité) et de précipitation dans les vides ouverts entre les blocs par la déformation (fentes à cristaux).

Pour réaliser la modélisation, on va donc découper la zone à modéliser en blocs de plus grande taille (hm-km) aisément traitables avec les moyens de calcul usuellement disponibles en considérant que les processus à plus petite échelle (déformations internes) se traduiront par les vides et recouvrements observés sur le modèle.

Comme le montre la Fig.1, chaque couche RL est découpée en blocs (des hexaèdres en trois dimensions) qui se déplacent de façon rigide sur le support de glissement S (c'est-à-dire par translation et rotation). Le volume de l'ensemble des blocs de chaque couche RL reste constant, les blocs ayant la particularité de pouvoir s'interpénétrer et de se dissocier, créant ainsi des vides et des recouvrements. Ainsi, l'aspect global du déplacement est représenté par la somme des déplacements des blocs, tandis que la partie locale de la déformation se situe au niveau des recouvrements et des vides.

Le mode de modélisation choisi ici permet de prendre en compte les variations de volume des blocs liés par exemple à des phénomènes de compaction. Des compactions croissantes avec la profondeur ou bien des compactions liées à des processus tectoniques peuvent être introduites d'une manière indépendante pour chacun des blocs et à chaque incrément de déformation.

Dans la nature, la déformation d'une couche, si elle peut être considérée comme globalement rigide, est liée à un mécanisme principal, qui est un mécanisme de flexion, dans le cas d'une région soumise à une tectonique compressive. Au cours de la flexion, la déformation de la couche a lieu préférentiellement dans la zone charnière, et le long des flancs.

Le plissement entraîne une compression à l'intrados et une extension à l'extrados de la couche, augmentant avec l'épaisseur de celle-ci. Entre l'intrados et l'extrados, la surface neutre a une longueur qui reste constante au cours de la transformation. Dans le cas d'une modélisation en 3D, c'est l'aire de la surface neutre qui reste constante.

Pour modéliser les déformations de chaque couche, on va donc considérer qu'elle est constituée d'une superposition de surfaces de part et d'autre d'une ligne ou surface neutre NL, qui se déforment selon leur position par rapport à cette ligne ou surface. On ne déforme plus un volume mais des surfaces superposées dans l'espace. Pour respecter la contrainte fixée de la rigidité des différents blocs, on va considérer que ce sont leurs arêtes verticales qui conservent leur hauteur et sont indéformables. Chaque arête est reconstruite à l'aide d'une rotation autour de la surface neutre NL, ce qui permet de conserver l'épaisseur (et la taille) des blocs dans les cas les plus simples, et de modifier l'une et l'autre si on peut les estimer.

Un autre problème est celui de la relation entre les couches successives RL. En effet, les vides et recouvrements observés dans le cadre d'un modèle par blocs rigides, qui sont occasionnés par le déplacement, rendent difficile la définition du « toit » d'une couche, ce qui empêche de bien prendre en compte le glissement aux interfaces entre les couches, alors que l'hypothèse de glissement entre les couches est fondamentale dans les modèles dits de « flexural slip » d'un type bien connu des spécialistes. Pour en tenir compte dans le modèle, on va ajouter des interfaces cisaillantes SI entre chaque couche plissée RL par flexion (Fig.1) ce qui va permettre d'assurer une parfaite continuité du maillage initial des couches successives.

Le modèle est donc constitué en respectant les trois règles suivantes :

a) les couches se plissent en flexion et glissent les unes par rapport aux autres ;

b) la transformation peut être isopache (l'épaisseur considérée est la distance normale au support de la ligne ou surface neutre NL), ou bien à épaisseur variable si on peut l'estimer à chaque incrément ; et

c) l'aire de la surface neutre est conservée au cours de la transformation, ou bien modifiée si on peut estimer ses variations.

Dans les exemples qui suivent, l'épaisseur et la surface sont conservées. L'élément neutre (la ligne ou la surface neutre) est déformé par un glissement parallèle au support de la couche, ce qui lui permet d'être à distance constante du support. Les arêtes verticales, qui sont reconstruites grâce à une rotation autour de l'élément neutre en conservant l'angle avec le support, représente la partie rigide de la déformation évoquée plus haut.

**Traduction formelle de l'algorithme de modélisation**

<u>Le domaine</u>

Le bassin est décomposé tout d'abord en blocs séparés par des failles, puis chaque bloc est subdivisé en couches et puis chaque couche est subdivisée en éléments, comme schématisé à la Fig.3a. Les éléments de chaque

couche sont des « hexaèdres» à huit sommets.

Les couches vont permettre de construire le support de glissement qui est une surface paramétrée $C^0$ : assemblage de surface planes $C^1$ définies à l'aide des coordonnées des sommets des éléments. Pour la première couche du bloc le support $C^0$ est construit à partir des faces à la base des éléments : des quadrilatères qui « découpés » donnent deux surfaces triangulaires $C^1$. Pour les couches supérieures, le même procédé est conservé, mais sur le toit de la couche précédente.

<u>Les inconnues</u>

Les inconnues de la déformation sont les coordonnées des noeuds (les sommets des éléments) après transformation. La déformation étant supposée rigide, les coordonnées de la transformée sont fournies par la solution de la translation appliquée à chaque noeud de la surface neutre :

$$\vec{t} : \delta\vec{\upsilon} \qquad (1)$$

où $\delta$ est une distance de déplacement et $\vec{\upsilon}$ la direction unitaire du déplacement. Sous forme paramétrique :

$$M' = \vec{t}(M) \qquad (2)$$

$$\begin{cases} x' = x + \upsilon_r \delta \\ y' = y + \upsilon_y \delta \\ z' = z + \upsilon_z \delta \end{cases} \qquad (3)$$

<u>Les déplacements</u>

Le déplacement de la couche se fait à partir du déplacement de la surface neutre. La surface neutre est supposée dans un premier temps comme la surface passant par les points milieux des arêtes verticales de la couche. Son déplacement se confond avec celui de ces points milieux d'arêtes. L'opération appliquée pour la déformation étant une translation curvilinéaire, la surface se conserve.

L'autre principe de conservation à vérifier est l'isopacité des couches au cours du déplacement. Pour ce faire, le point est translaté sur une droite parallèle au support, et à distance constante du support. Le maintien de cette distance est réalisé par l'introduction des plans médiateurs du support et par le système d'équations paramétriques décrit ci-dessous.

Dans un premier temps, on calcule la distance du milieu d'arête M avec le point d'insertion du plan médiateur I. Soient $\vec{\upsilon}_H$ la projection de $\vec{\upsilon}$ sur le plan du support $P_S$ suivant la normale à $P_S$ et $P_{med}$ le plan médiateur, tels que :

$$\bar{\upsilon}_H = \begin{cases} \upsilon_{h_x} \\ \upsilon_{h_y} \\ \upsilon_{h_z} \end{cases} \qquad (1)$$

$$(P_{med}) : a_m x + 3_m y + a_m z + h = 0 \qquad (5)$$

Le point $I$ est l'intersection de $P_{med}$ avec la droite D définie par :

$$D:\begin{cases} M_x + \upsilon_{h_x} t \\ M_y + \upsilon_{h_y} t \\ M_z + \upsilon_{h_z} t \end{cases} \quad (6)$$

Donc les coordonnées de *I* s'écrivent :

$$I:\begin{cases} M_x + \upsilon_{h_x} t_i \\ M_y + \upsilon_{h_y} t_i \\ M_z + \upsilon_{h_z} t_i \end{cases} \quad (7)$$

avec $t_I$ :

$$t_i = \frac{-\left(a_m M_x + 3_m M_y + \lambda_m M_z + h\right)}{\left(a_m \upsilon_{h_x} + \beta_m \upsilon_{h_y} + \gamma_m \upsilon_h\right)} \quad (8)$$

Soit $d = \|\overrightarrow{MI}\|$, sachant que δ est la distance du déplacement, alors :

Si d > δ, le point $M' = \vec{t}(M)$ est défini par :

$$M' = \begin{cases} M_x + \upsilon_{h_x} \delta \\ M_y + \upsilon_{h_y} \delta \\ M_z + \upsilon_{h_z} \delta \end{cases} \quad (9)$$

- si $d = \delta$, le point *M'* est confondu avec le point *I* .
- Si $d = \delta$, le point *M* doit encore se déplacer de la distance $\delta - d$. On effectue donc la même série d'opérations, en considérant *I* comme nouveau point *M* et l'on calcule le nouveau plan médiateur $P_{S_2} \cdot M'$ est alors défini par :

$$M' = \begin{cases} I_x + \upsilon_{h_x} (\delta - d) \\ I_y + \upsilon_{h_y} (\delta - d) \\ I_z + \upsilon_{h_z} (\delta - d) \end{cases} \quad (10)$$

Par commodité d'écriture la notation de $\vec{\upsilon}_h$ n'a pas changé, mais le vecteur évolue en fonction du support.

Reconstruction des arêtes

La reconstruction des arêtes est la deuxième partie de l'algorithme de déformation. Les arêtes verticales sont supposées rigides, donc leur hauteur est conservée, mais aussi l'angle qu'elle forme avec le support. Pour réaliser ces conservations, on utilise le fait que la distance normale au support d'un point de la surface neutre est constante : pour conserver l'angle on va supposer constante la distance entre la base de l'arête et la projection normale sur le

support du point de la surface neutre appartenant à l'arête. Cette distance est symbolisée sur la Fig.2 par le vecteur curvilinéaire $\vec{\mu}$.

Une fois la reconstruction effectuée, les couches glissant les unes sur les autres, la connectivité du maillage initial peut être brisée. Afin d'éviter cet écueil, une « interface cisaillante » est créée entre chaque couche afin de garder la connectivité (cf. Fig. 1), dans le même esprit que les plis d'entraînement induit. Cette interface peut être d'épaisseur nulle ou non suivant la modélisation recherchée.

**Validation de la méthode de modélisation**

La méthode a été validée par comparaison qualitative avec des méthodes classiques en 2D telles que celles décrites dans la référence précitée de Suppe ou dans le brevet FR 2 748 516 précité, sur les exemples suivants. Elle présente l'avantage d'être plus générale et de s'accomoder facilement de géométries très diverses. Sa formulation s'avère très simple ce qui conduit à des temps de calcul très raisonnables.

Pli de rampe cylindrique

Cet exemple a pour but de tester la validité de l'algorithme en 3D. Le cas-test est une succession de dix coupes géologiques identiques. Le bassin est composé de deux blocs ; les couches du blocs mobiles sont soumises à trois déplacements successifs de 1000m (cf. Fig.3a et 3b). La quantité de déplacement est appliquée de manière homogène sur le bord, dans la direction parallèle à celle de la rampe.

Les Fig.4a, 4b, 4c, 4d représentent respectivement différents états d'évolution d'une section d'un bassin séparés par des incréments de temps. On constate que les résultats obtenus sont similaires à ceux fournis par des codes bidimentionnels classiques.

Pli de rampe avec cisaillement

Le bassin précédent (composé de 4 couches cette fois-ci) est déformé à l'aide d'un cisaillement parallèle à la direction de la rampe, tel que la distance de déplacement δ soit définie, à chaque incrément, par :

$$\delta = 1000\frac{(y\ \max - y)}{y\max} \qquad (11)$$

Le bassin aura donc un bord fixe, tandis que le bord opposé se déplacement de 3000 m.

Les résultats (cf. Fig.5) sont cohérents par rapport à ceux obtenus avec les modélisations de type géométrique semi-3D tels que celle décrite par Scott et al déjà cité

Pli de rampe variable

Le bassin considéré n'est plus cylindrique (Fig.6a) : le pendage de la rampe évolue dans le sens de la largeur, pour passer de vingt degrés (section AA') à plus de soixante degrés (section BB'). La condition à la limite est un déplacement uniforme : 1000 mètres sur un pas de temps (cf. Fig. 6a et 6b).

Les Fig.7a, 7b et la Fig.8a, 8b montrent respectivement les sections AA', BB' avant et après déformation.Là encore, les résultats obtenus sont similaires à ceux proposés par des méthodes de type géométrique semi-3D et, contrairement aux modèles classiques, ils restent valides et cohérents pour des pendages de rampe supérieur à soixante degrés. L'algorithme proposé ici permet donc l'étude de cas à la géométrie plus complexe.

Les résultats présentés où la méthode de modélisation est appliquée, montrent sa capacité à traiter l'ensemble des problèmes que peut traiter un modèle semi-3D.

## Revendications

1. Méthode pour réaliser un modèle cinématique permettant de restituer en 3D des géométries intermédiaires d'objets géologiques d'une zone souterraine, depuis un état initial jusqu'à un état actuel connu par interprétation de données sismiques acquises, par des mesures et par des observations, **caractérisée en ce qu'**elle comporte les étapes suivantes :

   - on forme une représentation de la géométrie actuelle des objets géologiques de la zone par interprétation de données acquises obtenues par exploration sismique, par des mesures in situ et par des observations ;

- on subdivise chaque objet géologique dans son état initial en couches, chacune de ces couches étant discrétisées chacune par un maillage en une série d'éléments de volume hexaédriques ;

- on applique séparément et successivement des déformations tectoniques à chaque série d'éléments de volume d'une couche par rapport à une couche sous-jacente avec conservation de l'épaisseur de la couche et conservation de l'aire d'une surface neutre intermédiaire dans chaque élément de volume ; et

- on modifie itérativement les déformations tectoniques appliquées jusqu'à obtenir une représentation géologique sensiblement en accord avec l'état final connu de la zone souterraine.

**2.** Méthode selon la revendication 1, **caractérisée en ce qu'**elle comporte une subdivision de chaque objet géologique en couches séparées les unes des autres par des interfaces de déformation.

**3.** Méthode selon la revendication 2, **caractérisée en ce que** les interfaces de déformation sont constituées par les surfaces de contact entre les couches.

**4.** Méthode selon la revendication 2, **caractérisée en ce que** les interfaces de déformation sont constituées par des couches ductiles intermédiaires.

**5.** Méthode selon l'une des revendications précédentes, **caractérisée en ce qu'**elle comporte une modification géométrique des maillages pour tenir compte des effets de la compaction.

**Patentansprüche**

**1.** Verfahren zur Realisierung eines kinematischen Modells, das es erlaubt, räumlich Zwischengeometrien geologischer Objekte einer unterirdischen Zone zu restituieren, ausgehend von einem Ausgangszustand bis zu einem aktuellen Zustand, der durch Interpretation seismischer Daten bekannt ist, die durch Messungen und durch Beobachtungen erfasst wurden, **dadurch gekennzeichnet, dass** es die folgenden Stufen umfasst:

a. man bildet eine Wiedergabe der aktuellen Geometrie der geologischen Objekte der Zone durch Interpretation von Daten, die durch seismische Exploration mittels in-situ-Messungen und durch Beobachtungen erfasst wurden;

b. man unterteilt jedes geologische Objekt in seinem Ausgangszustand in Schichten, wobei jede dieser Schichten durch ein Maschennetz in eine Reihe von hexaedrischen Volumenelementen diskretisiert ist;

c. man bringt getrennt und nacheinander tektonische Verformungen an jeder Reihe von Volumenelementen einer Schicht, bezogen auf eine darunter liegende Schicht, unter Beibehaltung der Dicke der Schicht und Beibehaltung des Bereichs einer neutralen Zwischenfläche in jedem Volumenelement, an; und

d. man modifiziert iterativ die aufgebrachten tektonischen Verformungen, bis man eine geologische Darstellung im Wesentlichen in Übereinstimmung mit dem bekannten Endzustand der unterirdischen Zone erhält.

**2.** Verfahren nach Anspruch 1, **dadurch gekennzeichnet, dass** es eine Unterteilung jedes geologischen Objekts in durch Verformungsgrenzflächen voneinander getrennte Schichten umfasst.

**3.** Verfahren nach Anspruch 2, **dadurch gekennzeichnet, dass** die Verformungsgrenzflächen gebildet werden durch Kontaktflächen zwischen den Schichten.

**4.** Verfahren nach Anspruch 2, **dadurch gekennzeichnet, dass** die Verformungsgrenzflächen gebildet werden durch duktile Zwischenschichten.

**5.** Verfahren nach einem der vorhergehenden Ansprüche, **dadurch gekennzeichnet, dass** es eine geometrische Modifikation der Maschen zur Berücksichtigung der Kompaktierungseffekte umfasst.

## Claims

1. Method for producing a cinematic model permitting 3D reconstitution of the intermediate geometries of geological features of a subterranean zone from an initial state to a known current state by interpretation of acquired seismic data, by measurements and by observations, ***characterised in that*** it comprises the following steps:

   - a representation of the current geometry of the geological features of the zone is formed by interpretation of acquired data obtained by seismic exploration, by measurements *in situ* and by observations;
   - each geological feature in its initial state is subdivided into layers, each of these layers being quantized each by mapping in the form of a mesh with a series of hexahedral volume elements;
   - tectonic deformations are applied separately and successively to each series of volume elements of a layer in relation to an underlying layer, conserving the thickness of the layer and conserving the area of an intermediate neutral surface in each volume element, and
   - the tectonic deformations applied are modified iteratively until a geological representation is obtained which is substantially in accord with the known final state of the subterranean zone.

2. Method according to claim 1, ***characterised in that*** it comprises subdivision of each geological feature into layers. separated one from another by deformation interfaces.

3. Method according to claim 2, ***characterised in that*** the deformation interfaces are constituted by the contact surfaces between the layers.

4. Method according to claim 2, ***characterised in that*** the deformation interfaces are constituted by intermediate ductile layers.

5. Method according to one of the preceding claims, ***characterised in that*** it comprises geometrical modification of the mesh maps to take account of the effects of compaction.

FIG.1

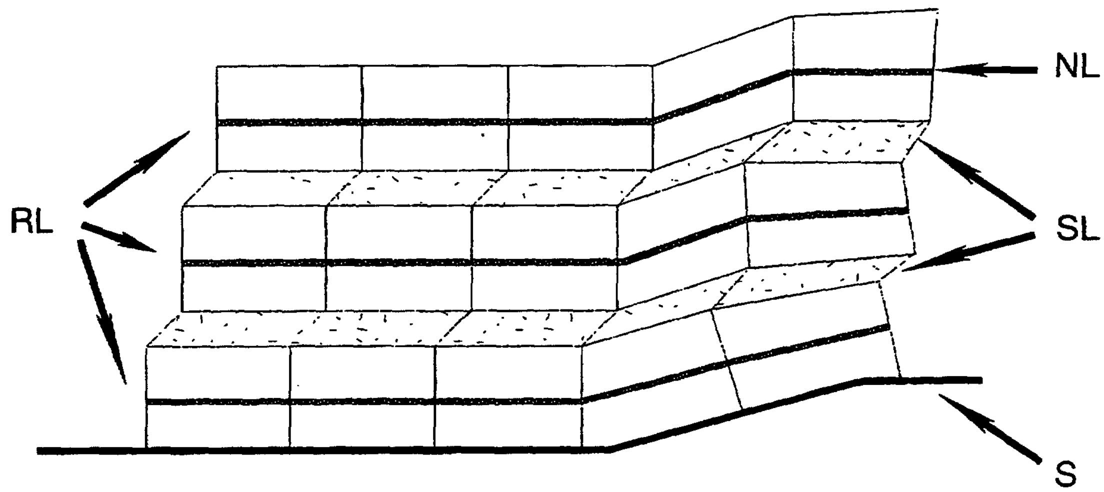

FIG.2

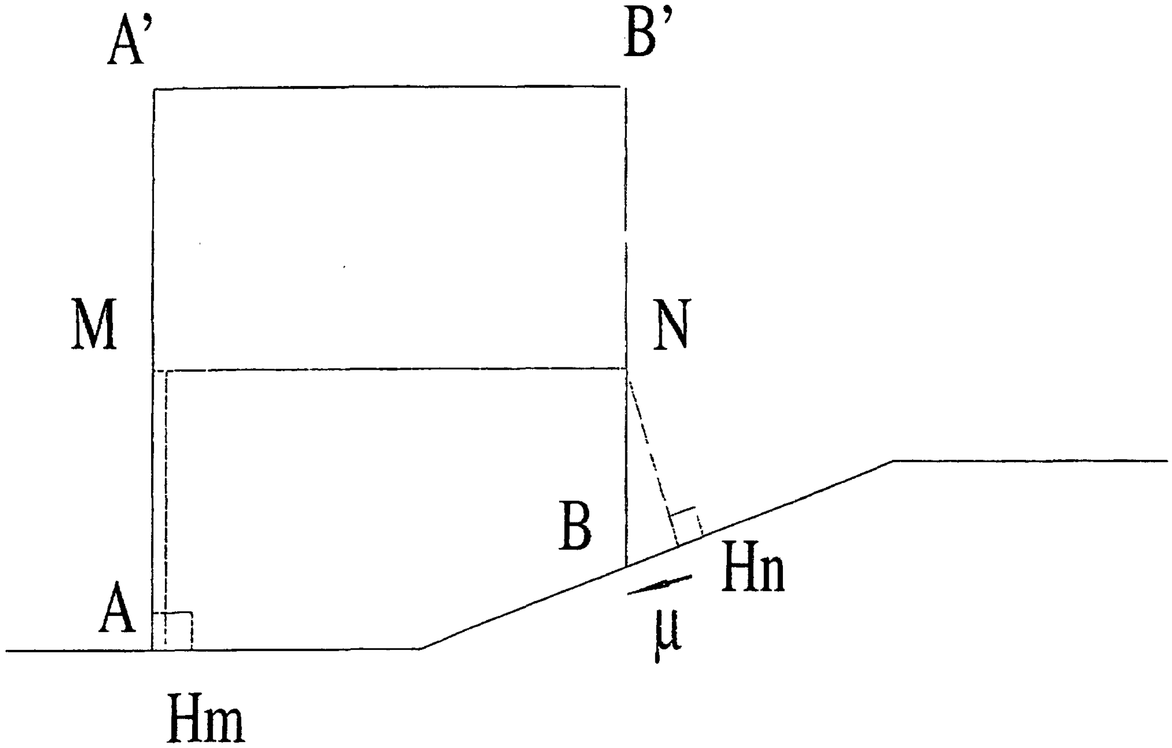

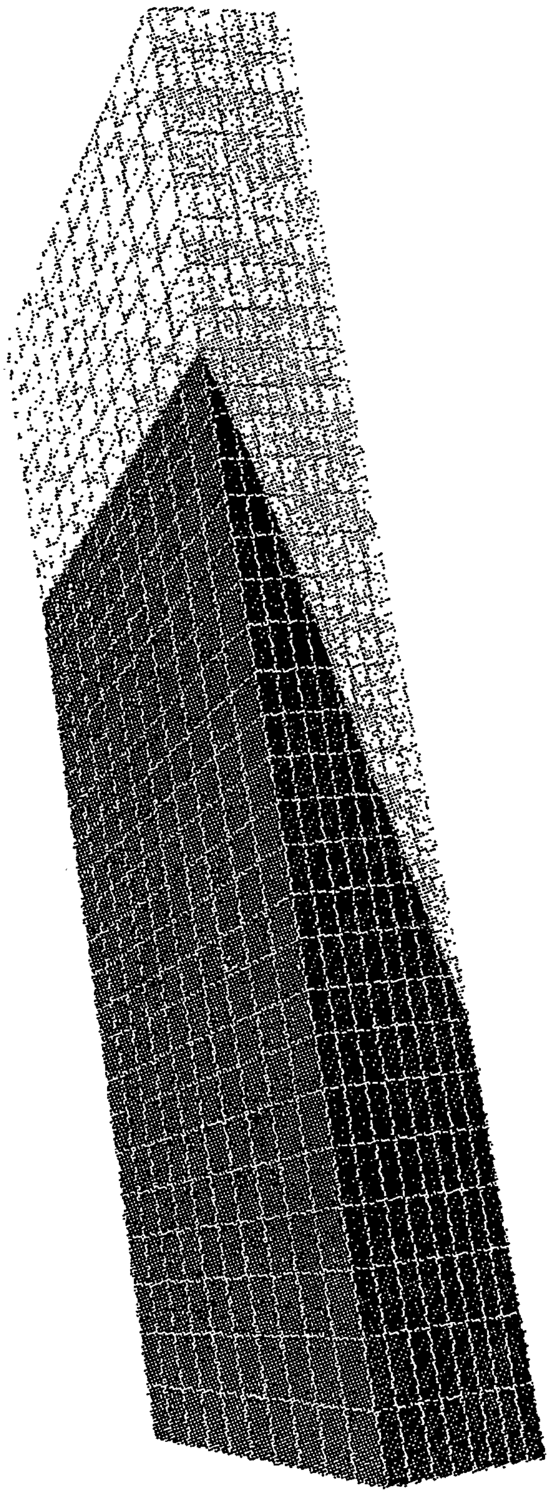

FIG.3A

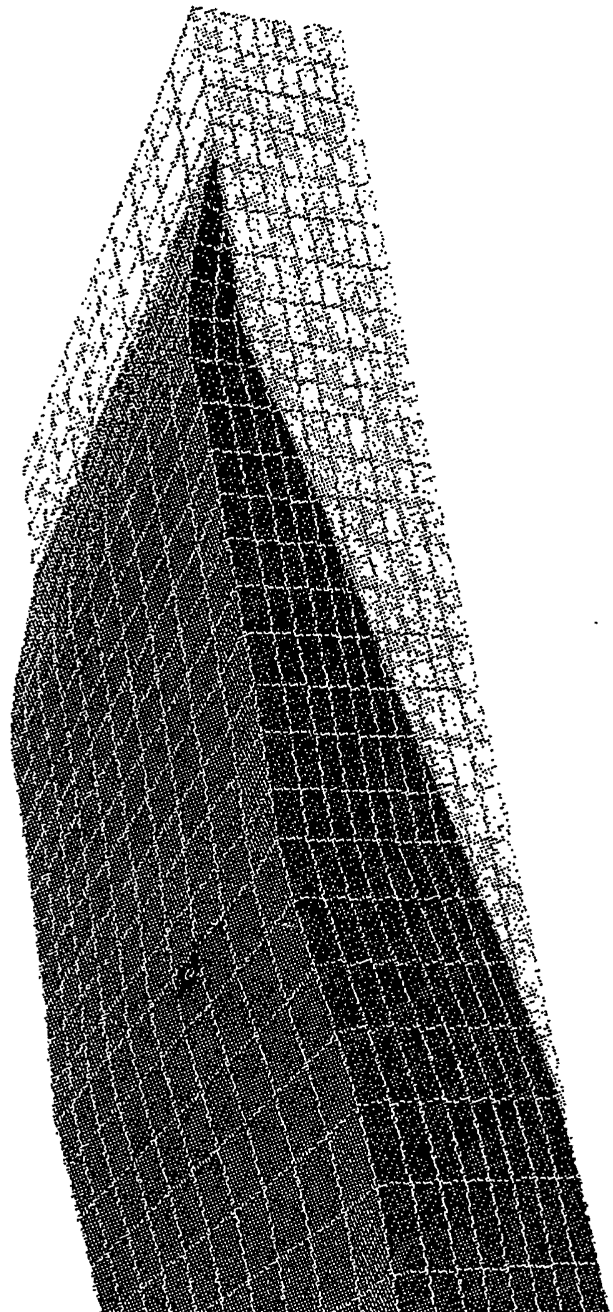

FIG.3B

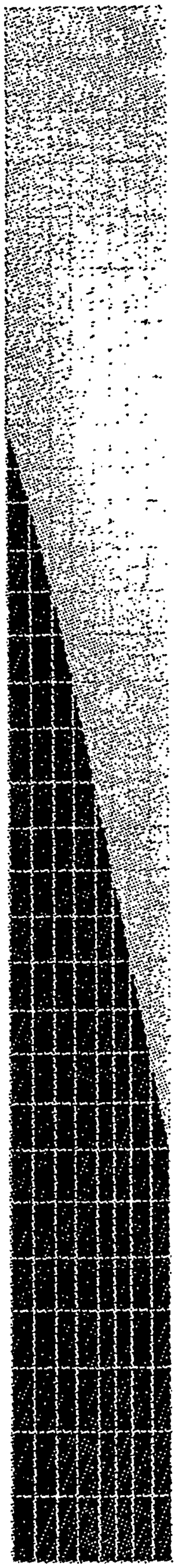

FIG.4A

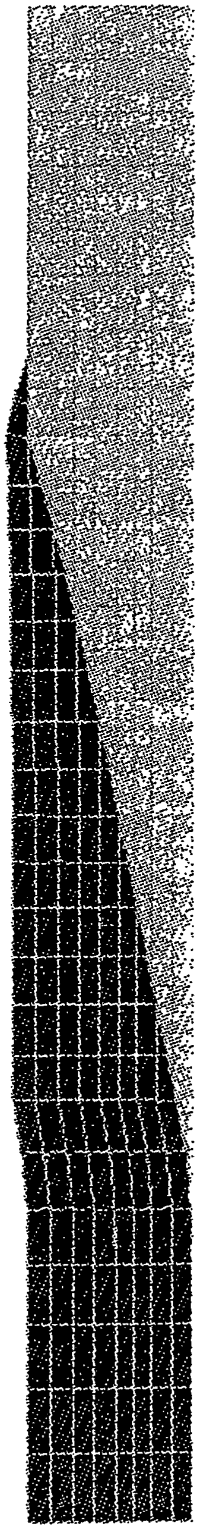

FIG.4B

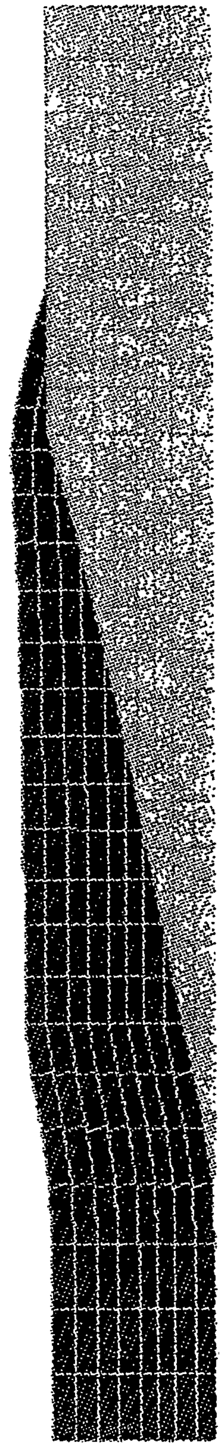

FIG.4C

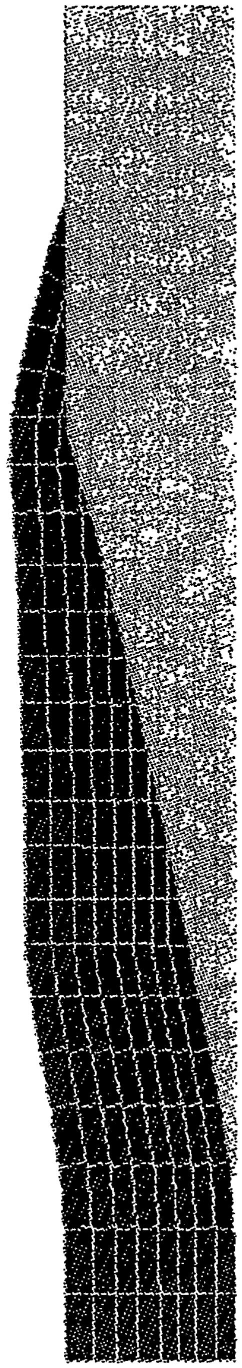

FIG.4D

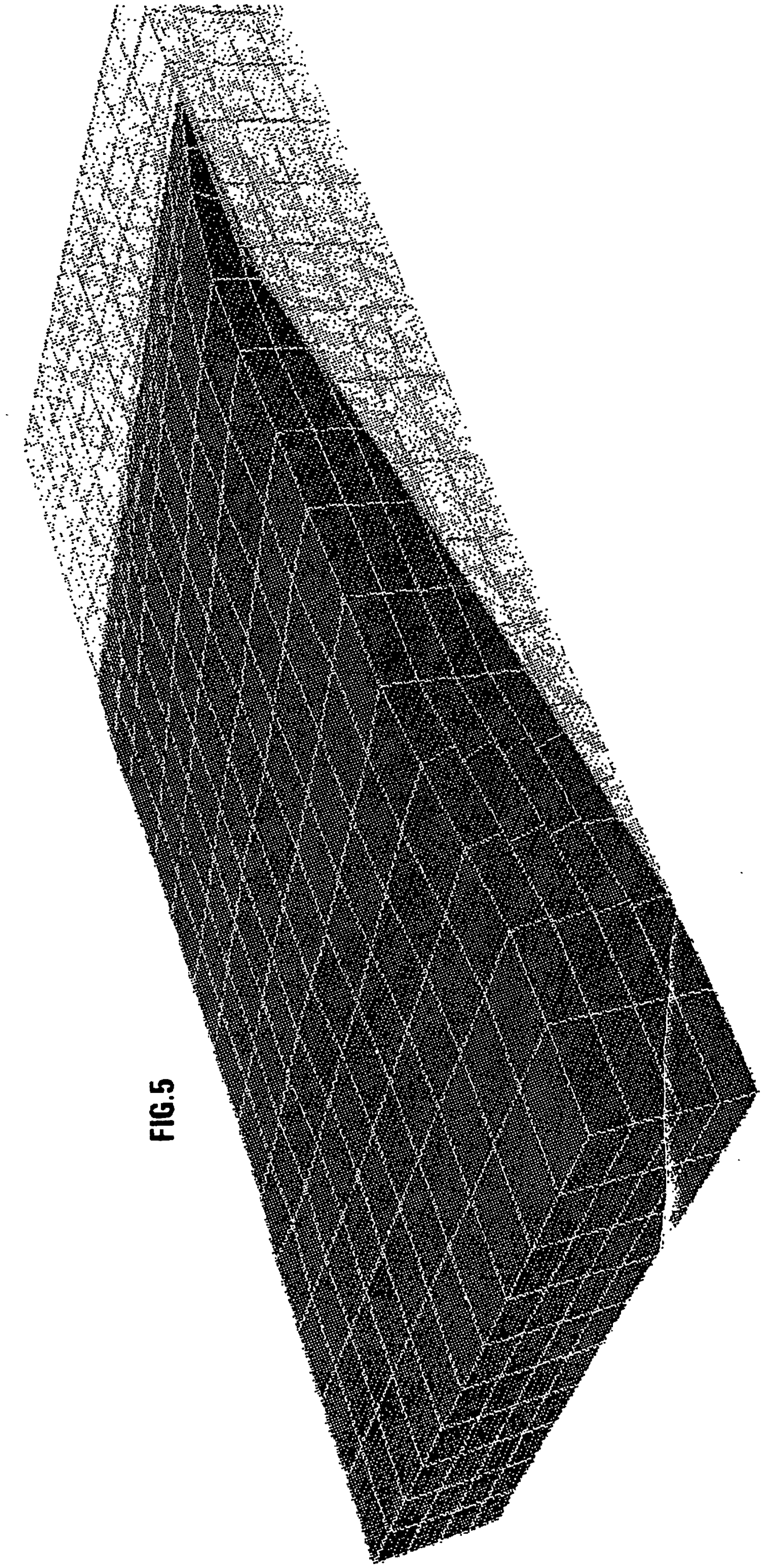

FIG.5

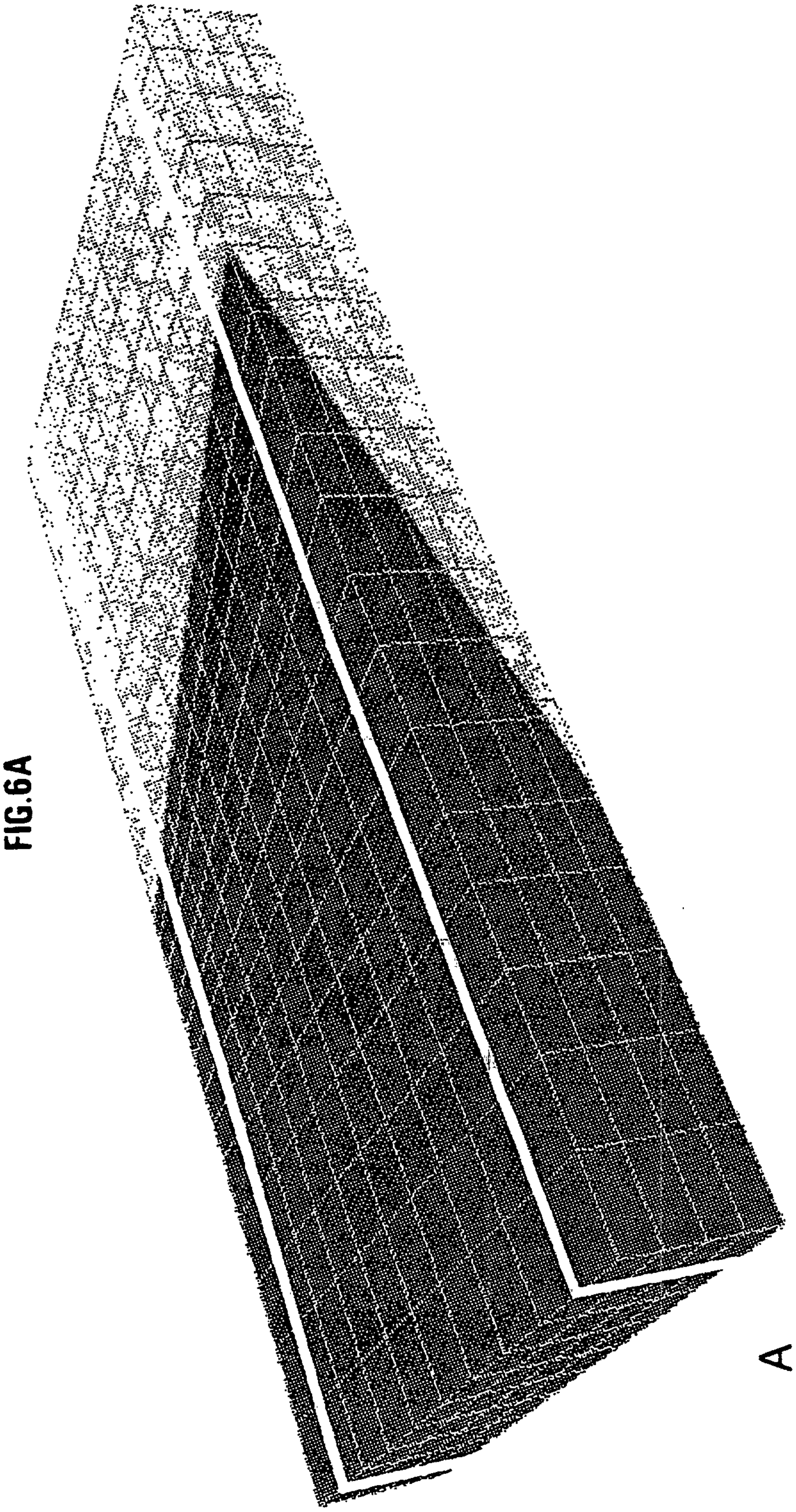


FIG.6A

FIG.6B

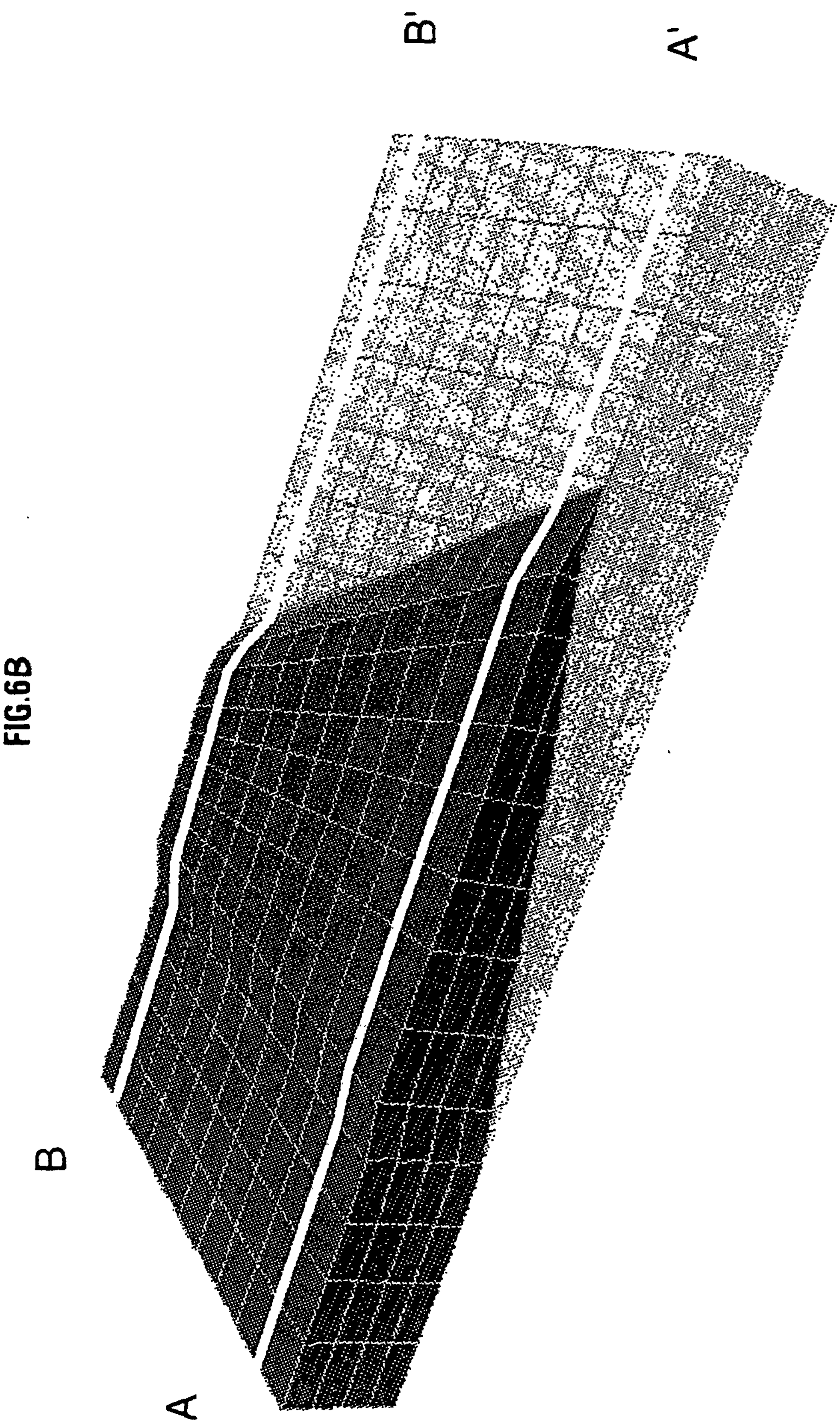

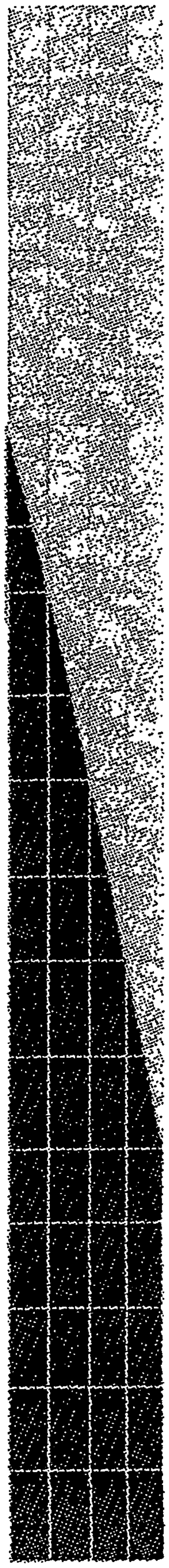

FIG.7A

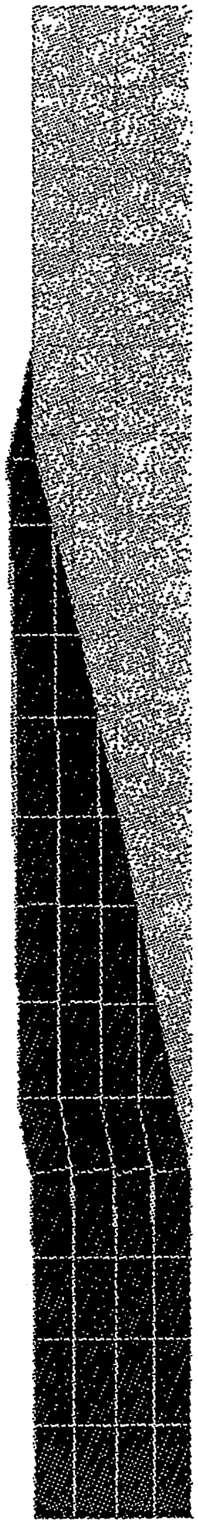

FIG.7B

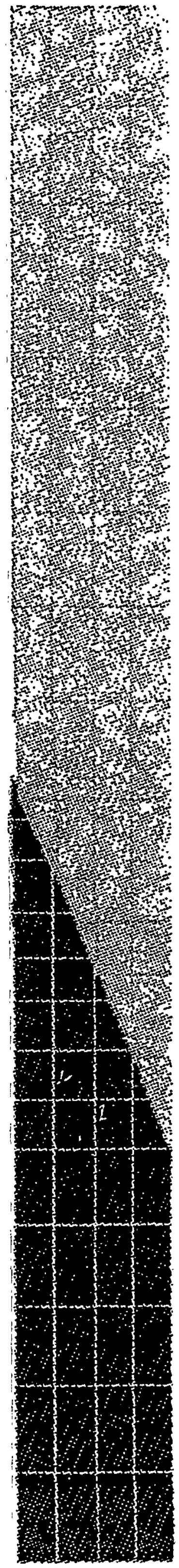

FIG.8A

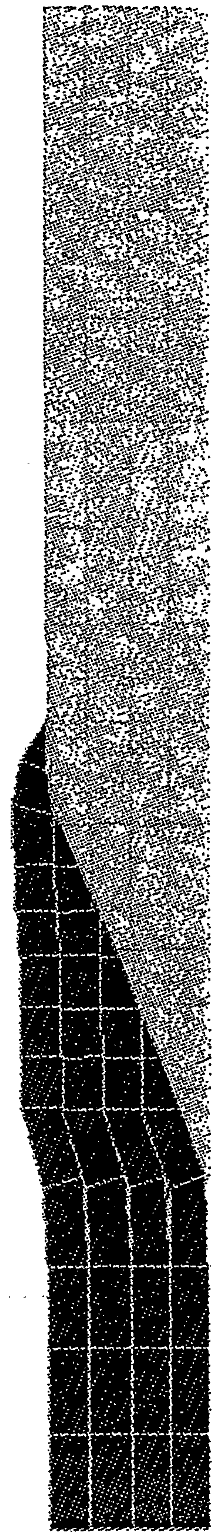

FIG.8B